# EUROPEAN PATENT SPECIFICATION

(11) **EP 2 847 018 B1**
(45) Date of publication and mention of the grant of the patent: **27.04.2016**
(21) Application number: 13714393.9
(22) Date of filing: 13.03.2013
(51) Int. Cl.: B60K 15/035

(54) **QUICK RESPONSE FLOAT-OPERATED VAPOR VENT VALVE**
SCHNELLREAGIERENDES SCHWIMMERGESTEUERTES DAMPFENTLÜFTUNGSVENTIL
SOUPAPE D'ÉVACUATION DE VAPEURS ACTIONNÉE PAR UN FLOTTEUR À RÉPONSE RAPIDE

(30) Priority: 10.05.2012 US 201261645354 P
(43) Date of publication of application: 18.03.2015
(73) Proprietor: Eaton Corporation, Cleveland, OH 44122 (US)
(72) Inventor: ERDMANN, Matthew, L., Galesburg, MI 49053 (US); WALKOWSKI, Paul, D., Ann Arbor, MI 48105 (US)
(74) Representative: Schwan Schorer & Partner mbB
(86) International application number: PCT/US2013/031042
(87) International publication number: WO 2013/169354

(56) References cited:
- EP-A1- 0 724 098
- EP-A2- 1 325 829
- DE-U1-202005 020 971
- US-A1- 2002 157 706

## Description

### CROSS-REFERENCE TO RELATED APPLICATIONS

This application claims the benefit of United States Provisional Application Serial No. 61/645,354, filed May 10, 2012.

### TECHNICAL FIELD

The present disclosure generally relates to float-operated vent valves, including vent valves that can be used, for example, to vent vapor pressure in fuel tanks.

### BACKGROUND

EP 0 724 098 A1 discloses a valve assembly according to the preamble of claim 1. Float-operated vent valves operate by closing a vent port in a fuel tank when the fuel level in the tank reaches a predetermined level. These valves may include a relatively thin flexible membrane that can seal against a valve seat of the vent port to close the valve. The valve port may have a relatively large circumference to provide the desired vapor flow at low vapor pressures. As a result, a relatively low closing force can be used to seal the flexible membrane against the valve seat.

When the fuel level in the tank drops below the predetermined level, the valve is configured to reopen and release fuel vapor through the valve port. However, increased vapor pressure in the fuel tank along with the relatively large circumference of the valve port can cause the membrane to remain sealed against the valve seat, thereby preventing the valve from opening. In other words, the valve sticks and remains closed in situations where it is desired for the valve to be open.

### SUMMARY

A valve assembly is provided for venting pressure in a fuel tank. The valve assembly includes a housing that defines a passage and a valve seat provided at one end of the passage. A float assembly is disposed within the housing. The float assembly includes a flexible membrane seal that seals against the valve seat when the float assembly rises in response to a rising fuel level in the fuel tank. The float assembly also includes a reopen profile that applies a reopening force along a select portion of the membrane seal to release the membrane seal from the valve seat when the float assembly drops in response to a falling fuel level in the fuel tank.

Various aspects of the present disclosure will become apparent to those skilled in the art from the following detailed description of the embodiments, when read in light of the accompanying drawings.

### BRIEF DESCRIPTION OF THE DRAWINGS

Embodiments of the invention will now be described, by way of example, with reference to the accompanying drawings, wherein:
**Fig. 1** is a section view of a valve assembly according to one aspect of the present disclosure.
**Fig. 2** is a perspective view of a float assembly used in the valve assembly of **Fig. 1** according to one aspect of the disclosure.
**Fig. 3** **is** a section view taken along line III-III of the float assembly of **Fig. 2****.**
**Figs. 4A** - **4C** are section views taken along line III-III of the float assembly of **Fig. 2** illustrating alternative aspects of a top portion of the float assembly.
**Figs. 5A - 5D** are perspective views of alternative aspects of a top portion of the float assembly of Fig. 2 showing various seal contacting contours.

### DETAILED DESCRIPTION

Reference will now be made in detail to embodiments of the present disclosure, examples of which are described herein and illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the spirit and scope of the invention as defined by the appended claims.

The present disclosure generally relates to a float-operated valve assembly with a relatively thin flexible membrane seal that readily seals against a valve seat with a low closing force when the fuel level in a fuel tank reaches a predetermined level. The valve assembly also reliably opens without sticking when the fuel level drops to a level where it is desired to vent the vapors in the tank.

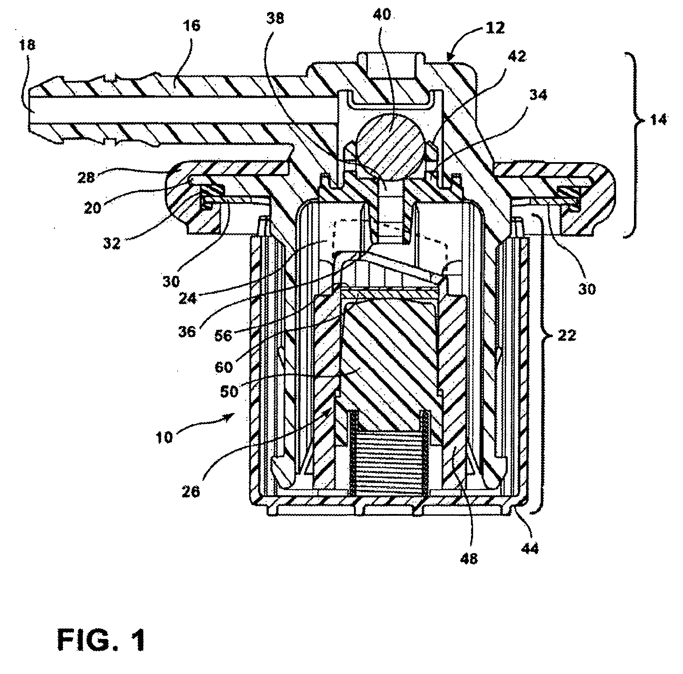

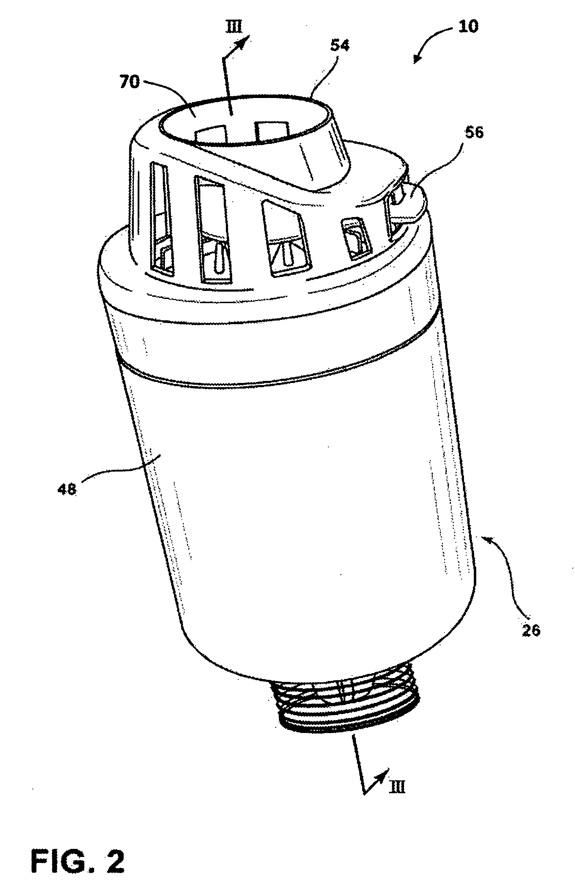

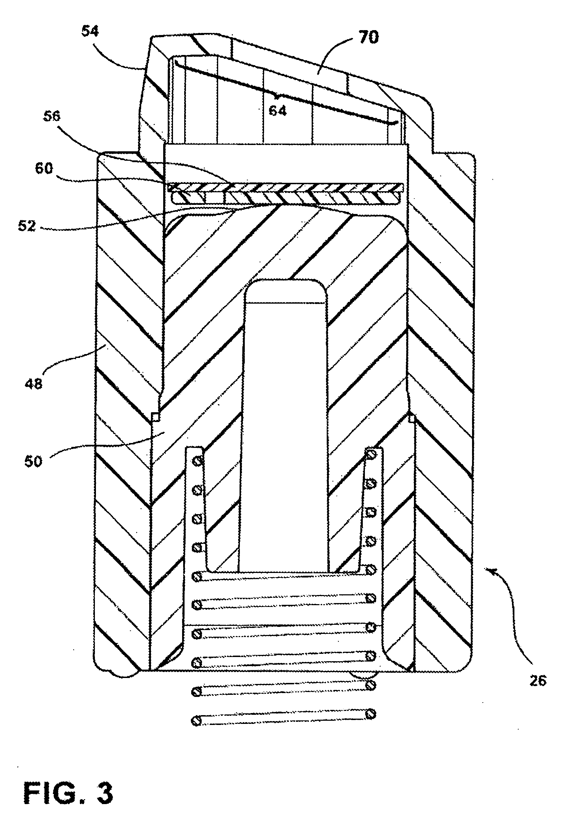

**Fig. 1** illustrates a valve assembly 10 according to one aspect of the present disclosure. The valve assembly 10 includes a housing 12 having an upper portion 14 to be disposed outside the fuel tank. The upper portion 14 includes a hose fitting 16 with a vapor outlet passage 18 and an outwardly extending annular flange 20. The housing 12 also includes a downwardly extending lower portion 22. The lower portion 22 is designed to extend into the interior of the fuel tank through a fuel tank access opening. The lower portion 22 has a float cavity 24 housing a float assembly 26, which is shown in greater detail in **Figs. 2** and **3****.**

The flange 20 on the upper portion 14 of the housing 12 has an annular attachment flange 28 disposed over it. The attachment flange 28 may be formed onto the flange 20 by any appropriate means, such as overmolding, and can have a retainer ring 30 that engages the attachment flange 28 and the lower portion 22. An elastomeric seal material 32 can be disposed in the periphery of the attachment flange 28 to form a substantially vapor impervious seal between the flange 20 and the attachment flange 28. The attachment flange 28 may be made of a material such as, for example, that is weldable to a plastic tank.

A valve seat member 34 is disposed in the housing 12 and includes an annular valve seat 36 formed on the lower end of a valving passage 38 that extends vertically through the valve seat member 34. A ball-shaped, gravity-responsive check valve 40 may be seated on an upper end of the passage 38 and positioned by an annular retaining wall 42 formed in the valve seat member 34.

A cup-shaped or U-shaped cover 44 may be disposed over the lower portion 22. The cover 44 may be secured to the lower portion 22 via any appropriate manner such as, for example, a threaded connection, a press-fit connection, a snap-fit connection, or a welded connection.

The upper end of the vapor passage 38 may have one or a plurality of grooves to permit bleed flow of fuel vapor when the check valve 40 is seated on the end of the passage 38. If there is excessive vapor pressure in the fuel tank, the tank pressure overcomes the weight of the check valve 40 and pushes the check valve 40 upward to release the pressure.

**Figs. 2** and **3** show the float assembly 26 in greater detail. The float assembly 26 may include a generally cylindrical or tubular body 48 and a core 50 disposed within the body 48. The core 50 may have a curved surface 52 at its upper end. The core 50 may be secured within the body 48 by any suitable means such as, for example, a press-fit connection, a snap-fit connection, or a welded connection. Alternatively, the body 48 and the core 50 can be integrally formed as a single-piece member. The body 48 can have a supporting member, such as a cage 54, formed on its upper end. The cage 54 may retain a resilient flexible membrane seal 56, which may have a relatively thin membrane configuration. The cage 54 can extend a sufficient height above the core 52 to permit limited motion of the membrane seal 56.

In one embodiment, the flexible membrane seal 56 is supported on a generally rigid member 60. The rigid member 60 can be seated on the curved surface 52 of the core 50 so that the rigid member 60 can pivot on the core 50. The rigid member 60 may be have an irregular upper surface, such as a textured or ribbed surface, to allow liquid fuel to drain away from the upper surface when the membrane seal 56 is sealed against the valve seat 36, thereby reducing or preventing sticking of the membrane seal 56 with the valve seat 36. Alternatively, or in addition, a bottom surface of the membrane seal 56 contacting the rigid member 60 may be textured as well for drainage.

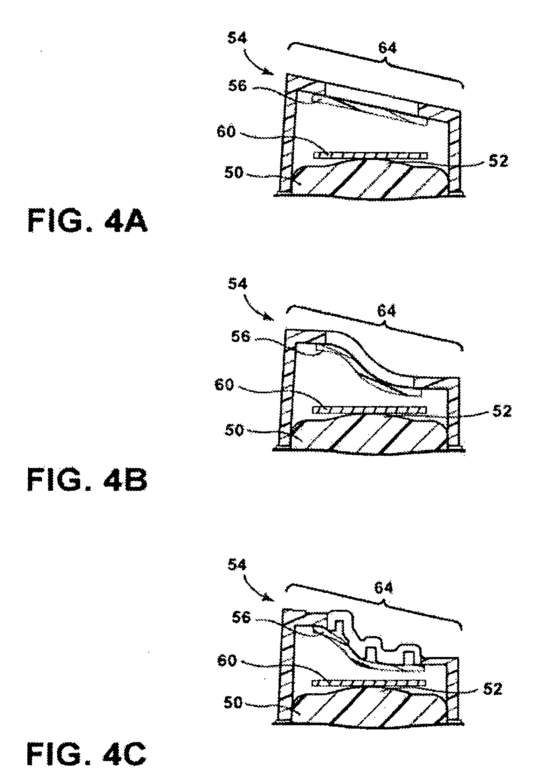

To further prevent sticking of the membrane seal 56 with the valve seat 36, the cage 54 has an irregularly-shaped reopen profile 64 near the upper portion thereof. The reopen profile 64 is configured to contact and deflect the membrane seal 56 from the valve seat 36 when the float assembly 26 moves downward. To accomplish this function, the reopen profile 64 can define any irregularly-shaped surface. In one embodiment, **Fig. 4A** illustrates an irregular straight (*i.e.,* slanted) reopen profile 64. In another embodiment, **Fig. 4B** illustrates an irregularly curved reopen profile 64. In still another embodiment, **Fig. 4C** illustrates a reopen profile 64 with relief cuts to provide its irregular shape. Regardless of the specific shape, the reopen profile 64 is supported on and/or forms part of the cage 54 attached to the float assembly 26. As a result, the reopen profile 64 contacts the membrane seal 56 and dislodges the membrane seal 56 as the float assembly 26 drops. The membrane seal 56 conforms to the shape of the reopen profile 64 such that the irregular shape of the reopen profile 64 allows drainage of liquid fuel and interruption of air flow around the membrane seal 56 to prevent sticking.

Although the cage 54 is shown as a support member for the reopen profile 64, any structure can be used as a supporting member to attach the reopen profile 64 to the float assembly 26. Similar to the cage 54, the supporting member can also constrain the movement of the membrane seal 56 if desired.

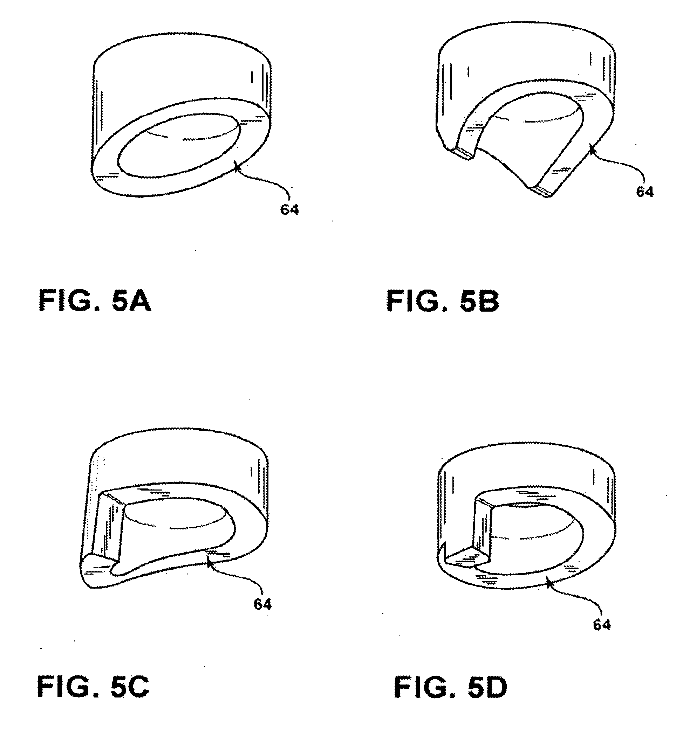

**Figs. 5A - 5D** show additional variations of the reopen profile 64 according to the disclosure. Those of skill in the art will recognize that the specific shape of the reopen profile 64 can be modified without departing from the scope of the present disclosure. The reopen profile 64 may have any configuration that allows the membrane seal 56 to conform to the reopen profile 64 while still preventing sticking. More particularly, the reopen profile 64 is designed to direct or concentrate a reopening force along an edge or point of the membrane seal 56 that is located away from the center axis of the float assembly 26. Concentrating the reopening force on a small area of the membrane seal 56 breaks the seal with less energy than applying a reopening force over the entire membrane seal 56. Also, the reopen profile 64 may initiate reopening at the lowest possible tank pressure. As reopening occurs, the resulting venting lowers the tank pressure and enables the valve to open further.

As noted above, the reopen profile 64 may be an irregular straight line **(****Fig. 4A****)** or may have relief cuts **(****Fig. 4B****).** Other possible reopen profiles may, for example, have an angled shape **(****Fig. 5A****,** which is a perspective view of the profile of **Fig. 4A****),** a dual-angled or dual shape forming a V **(****Fig. 5B**), a partial spiral shape **(****Fig. 5C****),** and a partial spiral shape with an additional protrusion **(****Fig. 5D****).** Other possible reopen profile shapes include an asymmetrical complex curve and/or some other profile having one or more force concentrators, such as projections, that apply force onto specific portions or areas of the membrane seal 56 to facilitate its release from the valve seat 36. Regardless of its specific shape, the reopen profile 64 is designed to apply force to selected portions or areas of the membrane seal 56, such as the perimeter, to initiate reopening with a small amount of force.

The reopen profile 56 may also have relief cuts or other textures, such as the ones shown in **Fig. 2B,** to interrupt air flow and prevent the membrane seal 56 from aspirating shut. As noted above, relief cuts and/or textures between contacting surfaces (e.g., between the membrane seal 56 and the reopen profile 64) may be included to drain liquid that may cause sticking.

Referring to **Fig. 1****,** the float assembly is biased upward by a spring 66 having its lower end engaged with inside of the cover 44. The upper end of the spring 66 can be registered in an annular groove 68 formed in the lower end of the core 50.

In operation, as the fuel level in the fuel tank rises, the float assembly 26 moves upward to the position shown in dashed outline in **Fig. 1** such that the valve seat 36 extends through an orifice 70 that is defined by the cage 54. The membrane seal 56 contacts the valve seat 36 and is sealed by the rigid member 60 pressing against the membrane seal 56. The orifice 70 itself can have any shape, such as round, elongated, slot-shaped, pear or teardrop-shaped, V-shaped, etc., as long as it allows contact between the valve seat 36 and the membrane seal 56. The shape of the orifice 70 may be affected by the shape selected for the reopen profile 64. For example, if the orifice 70 has a narrower portion, such as at the end of a teardrop-shaped or elongated opening, this narrower portion may be aligned with the lowest portion of the reopen profile 64 to focus the initial reopening forces on a smaller area of the membrane seal 56, optimizing the peel-away function. Moreover, depending on the shape of the reopen profile 64, the float assembly 26 may be designed to have a specific orientation within the float cavity 24 so that the membrane seal 56 matches the profile of the reopen profile 64 in the area surrounding the orifice 70 (*e.g.,* if the area surrounding the orifice 70 is angled, contoured, or otherwise asymmetrical).

When the fuel level in the fuel tank falls, the float assembly 26 drops, causing the reopen profile 64 to selectively contact the membrane seal 56 and release concentrated portions of the membrane seal 56 from the valve seat 36. The concentrated release can prevent the membrane seal 56 from sticking against the valve seat 36. Additional downward movement of the float assembly 26 may cause portions of the reopen profile 64 to contact additional portions of the membrane seal 56, depending on the specific shape of the reopen profile 64, and initiate additional releasing action. When the float assembly 26 lowers even further, the upper portion of the cage 54 contacts the membrane seal 56 and completes peeling of the membrane seal 56 away from the valve seat 36.

The present disclosure therefore shows a unique and novel construction for a valve assembly 10 having a relatively thin resilient membrane seal 56 mounted within a cage 54 on a float assembly 26. The membrane seal 56 has limited motion within the cage 54 for sealing on a valve seat 36 as the float assembly 26 rises. Upon withdrawal of fuel and lowering of the float assembly 26, a reopen profile 64 supported on the cage 54 contacts selected portions of the membrane seal 56 to release the membrane seal 56 from the valve seat 36. This configuration helps to prevent the membrane seal 56 from remaining in a completely closed condition. Upon further lowering of the float assembly 26, the cage 54 releases the membrane seal 56 completely away from the valve seat 36, allowing vapor to flow freely through the valve passage 38. The reopen profile 64 therefore provides fast, reliable opening of the valve assembly 10 at lower pressures in response to lowered fuel levels in the fuel tank.

## Claims

1. A valve assembly (10) for venting pressure in a fuel tank, the valve assembly (10) comprising:
a housing (12) defining a passage (18) and a valve seat (36) provided at one end of the passage (18); and
a float assembly (26) disposed within the housing (12), the float assembly (26) including
a flexible membrane seal (56) that seals against the valve seat (36) when the float assembly (26) rises in response to a rising fuel level in the fuel tank, and
a reopen profile (64) that applies a reopening force along a select portion of the membrane seal (56) to release the membrane seal (56) from the valve seat (36) when the float assembly (26) drops in response to a falling fuel level in the fuel tank;
**characterized in that**:
the valve assembly further comprises a cage (54) at an upper end of the float assembly (26), the cage (54) supporting the reopen profile (64); and
the flexible membrane seal (56) being disposed within the cage (54) of the float assembly (26).

2. The valve assembly (10) of claim 1, wherein the reopen profile (64) is integrally formed with the cage (54).

3. The valve assembly (10) of claim 1, wherein the cage (54) defines a height extending from the float assembly (26) that permits limited motion of the membrane seal (56).

4. The valve assembly (10) of claim 1, wherein the reopen profile (64) has a shape selected from the group consisting of a curve, an irregular curve, a shape with relief cuts, an angle, a dual angle, a partial spiral shape, and any of the above listed shapes with a protrusion.

5. The valve assembly (10) of claim 1, further comprising a generally rigid member (60) that supports the membrane seal (56).

6. The valve assembly (10) of claim 5, wherein the float assembly (26) further includes a core (50) that defines a curved surface, and the rigid member (60) is pivotally supported on the curved surface.

7. The valve assembly (10) of claim 5, wherein at least one of the rigid member (60), the membrane seal (56), and the reopen profile (64) has a ribbed surface.

8. The valve assembly (10) of claim 1, wherein the reopen profile (64) applies the reopening force along a perimeter of the membrane seal (56).

9. The valve assembly (10) of claim 1, wherein the reopen profile (64) applies the reopening force to a select area of the membrane seal (56) that is located away from a center axis of the float assembly (26).

10. The valve assembly (10) of claim 1, wherein the membrane seal (56) generally conforms to the reopen profile (64) when the float assembly (26) further drops in response to the falling fuel level in the fuel tank.

11. The valve assembly (10) of claim 1 further comprising:
a tubular body (48),
wherein the a cage (54) is formed on an upper end of the tubular body (48),
a core (50) disposed within the tubular body (48), the core (50) having a curved surface at a top end,
a rigid member (60) disposed within the cage (54) and pivotally supported on the curved surface of the core (50),
wherein the flexible membrane seal (56) that is supported on the rigid member (60).

12. The valve assembly (10) of claim 11, wherein the cage (54) defines a height extending from the curved surface of the core (50) that permits limited motion of the membrane seal (56).

## Patentansprüche

1. Ventilbaugruppe (10) zum Ablassen von Druck in einem Brennstoffbehälter, wobei die Ventilbaugruppe (10) versehen ist mit:
einem Gehäuse (12), das einen Durchgang (18) und einen Ventilsitz (36) ausbildet, der an einem Ende des Durchganges (18) bereitgestellt ist; und
einer innerhalb des Gehäuses (12) angeordneten Schwimmerbaugruppe (26), die wiederum
versehen ist mit:
einer flexiblen Membrandichtung (56), die dichtend an dem Ventilsitz (36) ansitzt, wenn die Schwimmerbaugruppe (26) in Ansprechen auf einen zunehmenden Brennstoffpegel in dem Brennstoffbehälter angehoben wird; und
einem Wiederöffnungsprofil (64), das eine Kraft zum Wiederöffnen entlang eines ausgewählten Bereiches der Membrandichtung (56) anlegt, um die Membrandichtung (56) von dem Ventilsitz (36) freizugeben, wenn die Schwimmerbaugruppe (26) in Ansprechen auf einen fallenden Brennstoffpegel in dem Brennstoffbehälter abgesenkt wird;
**dadurch gekennzeichnet, dass**:
die Ventilbaugruppe ferner eine Ummantelung (54) an einem oberen Ende der Schwimmerbaugruppe (26) aufweist, wobei die Ummantelung (54) das Wiederöffnungsprofil (64) stützt; und
die flexible Membrandichtung (56) innerhalb der Ummantelung (54) der Schwimmerbaugruppe (26) angeordnet ist.

2. Ventilbaugruppe (10) nach Anspruch 1, wobei das Wiederöffnungsprofil (64) integral mit der Ummantelung (54) ausgebildet ist.

3. Ventilbaugruppe (10) nach Anspruch 1, wobei die Ummantelung (54) eine sich von der Schwimmerbaugruppe (26) aus erstreckende Höhe festlegt, die eine begrenzte Bewegung der Membrandichtung (56) zulässt.

4. Ventilbaugruppe (10) nach Anspruch 1, wobei das Wiederöffnungsprofil (64) eine Form aufweist, die aus der Gruppe bestehend aus einer Kurve, einer unregelmäßigen Kurve, einer Form mit Entlastungsschnitten, einem Winkel, einem doppelten Winkel, einer partiellen Spiralform und jeder der oben genannten Formen mit einem Vorsprung ausgewählt ist.

5. Ventilbaugruppe (10) nach Anspruch 1, ferner versehen mit einem generell steifen Bauteil (60), das die Membrandichtung (56) stützt.

6. Ventilbaugruppe (10) nach Anspruch 5, wobei die Schwimmerbaugruppe (26) ferner einen Kern (50) umfasst, der eine gekrümmte Oberfläche festlegt, und wobei das steife Bauteil (60) schwenkbar an der gekrümmten Oberfläche gestützt wird.

7. Ventilbaugruppe (10) nach Anspruch 5, wobei mindestens das steife Bauteil (60), die Membrandichtung (56) oder das Wiederöffnungsprofil (64) eine gerippte Oberfläche aufweist.

8. Ventilbaugruppe (10) nach Anspruch 1, wobei das Wiederöffnungsprofil (64) die Kraft zum Wiederöffnen entlang eines äußeren Randes der Membrandichtung (56) anlegt.

9. Ventilbaugruppe (10) nach Anspruch 1, wobei das Wiederöffnungsprofil (64) die Kraft zum Wiederöffnen an einen ausgewählten Bereich der Membrandichtung (56) anlegt, der sich entfernt von einer Mittelachse der Schwimmerbaugruppe (26) befindet.

10. Ventilbaugruppe (10) nach Anspruch 1, wobei die Membrandichtung (56) generell mit dem Wiederöffnungsprofil (64) übereinstimmt, wenn die Schwimmerbaugruppe (26) in Ansprechen auf den fallenden Brennstoffpegel in dem Brennstoffbehälter weiter abgesenkt wird.

11. Ventilbaugruppe (10) nach Anspruch 1, ferner versehen mit:
einem rohrförmigen Körper (48),
wobei die Ummantelung (54) an einem oberen Ende des rohrförmigen Körpers (48) ausgebildet ist,
einem innerhalb des rohrförmigen Körpers (48) angeordneten Kern (50), der an einem oberen Ende eine gekrümmte Oberfläche aufweist,
einem innerhalb der um die Ummantelung (54) angeordneten steifen Bauteil (60), das schwenkbar an der gekrümmten Oberfläche des Kerns (50) abgestützt ist,
wobei die flexible Membrandichtung (56) an dem steifen Bauteil (60) abgestützt ist.

12. Ventilbaugruppe (10) nach Anspruch 11, wobei die Ummantelung (54) eine sich von der gekrümmten Oberfläche des Kerns (50) aus erstreckende Höhe definiert, die eine begrenzte Bewegung der Membrandichtung (56) zulässt.

## Revendications

1. Ensemble soupape (10) pour évacuer la pression dans un réservoir de carburant, l'ensemble soupape (10) comprenant :
un boîtier (12) définissant un passage (18) et un siège de soupape (36) prévu au niveau d'une extrémité du passage (18) ; et
un ensemble flotteur (26) disposé dans le boîtier (12), l'ensemble flotteur (26) comportant
un joint d'étanchéité à membrane souple (56) qui assure l'étanchéité contre le siège de soupape (36) lorsque l'ensemble flotteur (26) monte en réponse à un niveau de carburant montant dans le réservoir de carburant, et
un profil de réouverture (64) qui applique une force de réouverture le long d'une partie choisie du joint d'étanchéité à membrane (56) pour libérer le joint d'étanchéité à membrane (56) du siège de soupape (36) lorsque l'ensemble flotteur (26) descend en réponse à un niveau de carburant descendant dans le réservoir de carburant ;
**caractérisé en ce que** :
l'ensemble soupape comprend en outre une cage (54) au niveau d'une extrémité supérieure de l'ensemble flotteur (26), la cage (54) supportant le profil de réouverture (64) ; et
le joint d'étanchéité à membrane souple (56) étant disposé dans la cage (54) de l'ensemble flotteur (26).

2. Ensemble soupape (10) de la revendication 1, dans lequel le profil de réouverture (64) est formé d'un seul tenant avec la cage (54).

3. Ensemble soupape (10) de la revendication 1, dans lequel la cage (54) définit une hauteur s'étendant à partir de l'ensemble flotteur (26) qui permet un mouvement limité du joint d'étanchéité à membrane (56).

4. Ensemble soupape (10) de la revendication 1, dans lequel le profil de réouverture (64) a une forme choisie dans le groupe constitué d'une courbe, d'une courbe irrégulière, d'une forme avec des entailles en relief, d'un angle, d'un double angle, d'une forme en spirale partielle, et de l'une des formes énumérées ci-dessus avec une saillie.

5. Ensemble soupape (10) de la revendication 1, comprenant en outre un élément globalement rigide (60) qui supporte le joint d'étanchéité à membrane (56).

6. Ensemble soupape (10) de la revendication 5, dans lequel l'ensemble flotteur (26) comporte en outre un noyau (50) qui définit une surface incurvée, et l'élément rigide (60) est supporté en pivotement sur la surface incurvée.

7. Ensemble soupape (10) de la revendication 5, dans lequel au moins l'un de l'élément rigide (60), du joint d'étanchéité à membrane (56), et du profil de réouverture (64) a une surface nervurée.

8. Ensemble soupape (10) de la revendication 1, dans lequel le profil de réouverture (64) applique la force de réouverture le long d'un périmètre du joint d'étanchéité à membrane (56).

9. Ensemble soupape (10) de la revendication 1, dans lequel le profil de réouverture (64) applique la force de réouverture à une zone choisie du joint d'étanchéité à membrane (56) qui est située loin d'un axe central de l'ensemble flotteur (26).

10. Ensemble soupape (10) de la revendication 1, dans lequel le joint d'étanchéité à membrane (56) s'adapte globalement au profil de réouverture (64) lorsque l'ensemble flotteur (26) descend en outre en réponse au niveau de carburant descendant dans le réservoir de carburant.

11. Ensemble soupape (10) de la revendication 1, comprenant en outre :
un corps tubulaire (48),
dans lequel une cage (54) est formée sur une extrémité supérieure du corps tubulaire (48),
un noyau (50) disposé dans le corps tubulaire (48), le noyau (50) ayant une surface incurvée au niveau d'une extrémité de sommet,
un élément rigide (60) disposé dans la cage (54) et supporté en pivotement sur la surface incurvée du noyau (50),
dans lequel le joint d'étanchéité à membrane souple (56) est supporté sur l'élément rigide (60).

12. Ensemble soupape (10) de la revendication 11, dans lequel la cage (54) définit une hauteur s'étendant à partir de la surface incurvée du noyau (50) qui permet un mouvement limité du joint d'étanchéité à membrane (56).
